# EUROPEAN PATENT APPLICATION

(11) **EP 4 014 920 A1**
(43) Date of publication of application: **22.06.2022**
(21) Application number: 20215061.1
(22) Date of filing: 17.12.2020
(51) Int. Cl.: A61C 5/55

(54) **ENDODONTIC OBTURATION POINT AND METHOD FOR MANUFACTURING ENDO-DONTIC OBTURATION POINT FOR OBTURATING A DENTAL ROOT CANAL**

(71) Applicant: Coltène/Whaledent AG, 9450 Altstätten (CH)
(72) Inventor: Ezeh, Benjamin, 6830 Rankweil (AT); Schlüter, Martin, 88239 Wangen (DE)
(74) Representative: Hepp Wenger Ryffel AG

(57) **Abstract**

An endodontic obturation point for obturating a dental root canal comprising a core material, an outer material and a coupling element for transmitting ultrasonic waves to the obturation point. The core material comprises an ultrasonic non-deformable material and the outer material comprises an ultrasonic deformable material.

## Description

The invention relates to an endodontic obturation point and to a method for manufacturing an endodontic obturation point for obturating a dental root canal according to the independent claims.

The objective of any obturation of a tooth root canal with an endodontic obturation point is to close the tooth root canal in such a way that the penetration of any germs into the root canal is prevented. Another objective of a tooth root canal obturation is the complete filling of the side canals of the tooth root canals by the endodontic obturation point to prevent the formation of any cavities, which could in turn provide some space for germ formation and therefore for new infections. Recently, the ultrasonic method has proven to be particularly advantageous for this treatment. The basic concept of the ultrasonic method is the change of the surface of a thermoplastic material, for example of an endodontic obturation point, into a plastic or liquid state as a result of the mechanical vibrations. In this way the thermoplastic surface is then welded to a biomechanically instrumented, cleaned, shaped and disinfected tooth surface. The advantage of this method is that complete filling of the smallest lateral tooth root canals can be guaranteed in a very short time. Several examples are known from the state of the art, which use this technology for the restoration of teeth, but also in tooth root canals.

Document WO 2004/017927 describes the restoration of a natural tooth or tooth part using the ultrasonic welding method. Document US 2010/0081110 shows the application of the ultrasonic method for the preparation of fillings of tooth cavities, for the application of dental veneers, tooth inlays on already prepared teeth and for the application of crowns, bridges and partial dentures on tooth stumps.

Document US 2013/0004917 discloses, in addition to the applications already mentioned, the use of ultrasonic welding for the insertion of endodontic points into tooth root canals.

Document US 3919775, on the other hand, shows the filling of a root canal with gutta percha cones using ultrasonic technology, which guarantees complete filling of the tooth root canal system using mechanical vibrations.

The thermoplastic material of the prior art is disadvantageous because of its flexibility and instability by the manual introduction in the tooth root canal. At the same time, however, such a thermoplastic material is required in order to use the ultrasonic method and achieve an optimal result.

This objective is solved by an endodontic obturation point and a method for manufacturing an endodontic obturation point for obturating the tooth root canal according to the independent claims.

Pursuant to the invention, an endodontic obturation point for obturating a dental root canal comprises a core material, an outer material and a coupling element. The core material comprises an ultrasonic non-deformable material and the outer material comprises an ultrasonic deformable material. The coupling element transmits ultrasonic waves to the obturation point and is positioned at the top of the obturation point.

Hereby the core material, the outer material and the coupling element are in direct contact to each other.

The non-deformable material of the core material is a solid material which doesn't deform under the influence of ultrasonic waves, which means that the core material does not change its morphology irreversibly. In contrast, the deformable material of the outer material is a solid material which has the ability to deform irreversibly under the action of force after exceeding a yield point and to retain this shape after the action. In this sense the action of force is the use of ultrasonic waves. The material of the coupling element is preferably a non-deformable material, more preferably the same material as the core material.

In preferred embodiments the material of the coupling element is a polymeric material, a crosslinked polymer material, preferably a duroplastic, a thermoplastic, an elastomeric material or a metallic material.

The coupling element is designed in such a way that it can be brought into contact with the core material and the outer material by means of threading, clamping, insertion, connecting, rotating mechanism or any other conventional joining method.

The coupling element is shaped as a counterpart to a sonotrode and forms a coupling system together with the sonotrode.

Preferred coupling systems are selected from the group comprising luer-lock or luer slip, fastening systems in shape of nuts, bolts, screw systems, all kinds of thread systems, pull in screws, internal or external screw threads, outside and inside threaded fasteners with conventional geometrical forms, quick release systems, tamping systems, adjustable gliders, threaded plugs, anti-skid plugs for expander plugs, force fit couplings, form fit couplings, clamps as for example spring clamps, hose clamps, wing nuts, all screw connections that can be tightened and snap couplings wherein the coupling element is encompassed by the shape of the sonotrode or the sonotrode is encompassed by the shape of the coupling element. In addition, the sonotrode can be shaped as a loop, accommodating the coupling element with a precise fit.

The top of an obturation point is the side facing out of the root canal.

The advantage of the inventive endodontic obturation point is the interaction of the material properties and the shape of the core material and outer material. While the core material and the coupling element provide the necessary stability for an easy and secure manual insertion of the endodontic obturation point and a good ultrasonic transmission, the outer material allows for secure sealing of the tooth root canal and its lateral canals.

In preferred embodiments the ultrasonic non-deformable material is a polymeric material, a crosslinked polymer material, preferably a duroplastic, a thermoplastic, an elastomeric material or a metallic material.

Duroplastic, thermoplastic, elastomeric or metallic materials are advantageous because of their stability and non-deformability under the influence of ultrasonic waves.

In preferred embodiments the ultrasonic non-deformable material has an E-modulus in the range of 0.05-400 GPa, preferably 0.1-50 GPa.

The E-modulus of the ultrasonic non-deformable material in a range between 0.05 and 400 GPa has the advantage that the material provides a good ultrasonic transmission to the ultrasonic deformable material of the outer material.

In preferred embodiments the diameter of the ultrasonic non-deformable material is between 0.1 mm and 2.5 mm, preferably between 0.15 mm and 1.9 mm.

Thereby the ultrasonic non-deformable material is cylindrical, having the same diameter throughout or having different diameters, or tapers from the tip to the shaft or variable tapers from the tip to the shaft, forming a conical shape.

A diameter of the ultrasonic non-deformable material in the range between 0.1 mm and 2.5 mm shows sufficient strength to insert the endodontic obturation point into the root canal manually. At the same time, a good transmission of the ultrasonic waves from the non-deformable ultrasonic material to the ultrasonically deformable material is provided.

In preferred embodiments the ultrasonic non-deformable material comprises at least one filler material.

Preferred filler materials are radio-opacifying agents and/or antibacterial and/or antiviral agents and/or bioactive ceramic materials and additives for the adjustment of material properties.

Preferred radio-opacifying agents are selected from the group of salts, and/or oxides/hydroxides of the following metals: barium, calcium, zinc, ytterbium, yttrium, gadolinium, zirconium, strontium, tungsten, tantalum, niobium, bismuth, molybdenum, lanthanum, and iodine compounds.

Preferred antibacterial and antiviral agents are selected from the group of antibiotics, salts, and/or oxides and/or hydroxides of calcium, copper, magnesium, silver, titanium, zinc, and chlorhexidine digluconate.

Preferred bioceramic materials are selected from the group of MTA, bioglass, calcium silicates, calcium phosphates, calcium hydroxide and calcium sulfate.

Particularly preferred filler materials are silicium dioxide, carbon fibers, graphite, glass beads, boron nitride and radio-opacifying agents.

The advantage of the filler materials is the improvement of the ultrasonic transmission.

In preferred embodiments the ultrasonic deformable material is a thermoplastic and/or an elastomeric material. The thermoplastic material is part of the group of biodegradable thermoplastics or part of the group of non-biodegradable thermoplastics. Preferably thermoplastic ultrasonic deformable materials selected from the group of polyisoprene, polycaprolacton, poly lactic acid, polyglycolic acid, polyhydroxyalkanoates, polyamide, polymethacrylates, polycarbonate or polyethylene. More preferably ultrasonic deformable materials are polyisoprene, most preferably gutta percha.

Thermoplastic materials possess a characteristic yield point. If this yield point is exceeded by mechanical vibrations, the thermoplastic materials are liquified. For this reason, thermoplastic materials are particularly suitable for use in ultrasonic welding.

In preferred embodiments the glass transition temperature of the ultrasonic deformable material is between -75 and 150 °C, preferably between -72 and 110 °C.

In preferred embodiments the melting temperature of the ultrasonic deformable material is in a range between 30 and 150 °C, preferably between 40 and 100 °C.

The melting temperature of the ultrasonic deformable material is determined by Differential scanning calorimetry (DSC). Differential scanning calorimetry (DSC) is a thermo-analytical technique which measures the enthalpy changes due to changes in the physical and chemical properties of a material as a function of temperature or time. It is used to determine the thermal properties of polymeric materials. Changes in the heat capacity are tracked as changes in the heat flow, when a sample of specific mass is heated or cooled. This enables the detection of transitions such as melts, glass transitions, phase changes, and curing of the polymer material in question. See also Perking Elmer, DSC Beginner's Guide, Gill Pooria et al, Differential Scanning Calorimetry Techniques Applications in Biology and Nanoscience.

The advantage of a melting temperature of an ultrasonic deformable material in the range between 40 and 100 °C is the low heat input required by the ultrasonic method, preventing dentine damage, in contrast to conventional techniques, which employ a higher temperature of about 150°C - 250°C. At this temperature dentine, dentine-like structures and surrounding tissues could be damaged.

In preferred embodiments the ultrasonic deformable material comprises at least one filler material.

Preferred filler materials are radio-opacifying agents and/or antibacterial and/or antiviral agents and/or bioactive ceramic materials and additives for the adjustment of material properties.

Preferred radio-opacifying agents are selected from the group of salts, and/or oxides/hydroxides of the following metals: barium, calcium, zinc, ytterbium, yttrium, gadolinium, zirconium, strontium, tungsten, tantalum, niobium, bismuth, molybdenum, lanthanum, and iodine compounds.

Preferred antibacterial and antiviral agents are selected from the group of antibiotics, salts, and/or oxides and/or hydroxides of calcium, copper, magnesium, silver, titanium, zinc, and chlorhexidine digluconate.

Preferred bioceramic materials are selected from the group of MTA, bioglass, calcium silicates, calcium phosphates, calcium hydroxide and calcium sulfate.

Preferred additives are selected from the group of pigments, waxes and stabilisers.

The advantage of the filler material is the improvement of the properties of the ultrasonic deformable material and its workability during the manufacturing process.

In preferred embodiments the covering thickness of the ultrasonic deformable material is between 0.05 and 1.5 mm, preferably between 0.1 and 1.2 mm.

The covering thickness of the ultrasonic deformable material can have the same thickness over the whole length of the endodontic obturation point, but can also change the thickness over the length.

The thickness of the ultrasonic deformable material in the range between 0.05 and 1.5 mm is advantageous because of the optimized size of the endodontic obturation point which can be easily inserted into the tooth root canal and offering at the same time sufficient ultrasonic deformable material for the optimized sealing of the tooth root canal and its side canals.

In preferred embodiments the endodontic obturation point is cylindrical or conical in shape.

A cylindrical or conical shape of the endodontic obturation point is advantageous, as it ensures a particularly good insertion of the endodontic obturation point and improves its match to the prepared root canal.

In preferred embodiments the endodontic obturation point comprises a coupling element in form of a handle, preferably wherein the handle comprises the same material as the core.

A handle, particularly a standardized handle is advantageous for the adaptation of the endodontic obturation point with common application devices. It is particularly advantageous if the handle is made of the same material as the core material. This simplifies notably the method of manufacture of the endodontic obturation point.

The objective is further solved by a method for manufacturing an endodontic obturation point. The method comprises the following steps:
i. Providing a core material, comprising an ultrasonic non-deformable material. The ultrasonic non-deformable material is a polymeric material, which comprises a modulus of elasticity in the range of 0.05-400 GPa
ii. covering of at least a distal portion of said core material with an ultrasonic deformable material, which is a thermoplastic material, preferably a polyisoprene, comprising a melting temperature in a range between 30 and 150 °C.

Hereby the ultrasonic non-deformable material and the ultrasonic deformable material are in direct contact to each other.

The non-deformable material of the core material of step i. is a solid material which doesn't deform under the influence of ultrasonic waves as described above.

A modulus of elasticity in a range of 0.05-400 GPa of said ultrasonic non-deformable material is advantageous because it provides a good ultrasonic transmission to the ultrasonic deformable material of step ii.

However, the ultrasonic deformable material of step ii. is a solid material which has the ability to deform irreversibly under the action of force after exceeding a yield point and to retain this shape after action. In this sense the action of force is the use of ultrasonic waves. For this purpose, thermoplastic materials possess a characteristic yield point. If this yield point is exceeded by mechanical vibrations, the thermoplastic materials are liquified. For this reason, thermoplastic materials are particularly suitable for use in ultrasonic welding.

A melting temperature in the range between 30 and 150°C of the ultrasonic deformable material is advantageous because the ultrasonic method thus requires only a low heat input. This again, prevents dentine damage.

In preferred embodiments the core material of step i. comprises a diameter between 0.1 mm and 2.5 mm, preferably between 0.15 mm and 1.9 mm.

Thereby the ultrasonic non-deformable material is cylindrical having the same diameter throughout or having different diameters, forming a conical shape.

A diameter of the ultrasonic non-deformable material in the range between 0.1 and 2.5 mm shows sufficient strength to insert the endodontic obturation point into the root canal manually. At the same time, a good transmission of the ultrasonic waves from the non-deformable ultrasonic material to the ultrasonically deformable material is provided.

In preferred embodiments the ultrasonic non-deformable material of step i. comprises at least one filler material.

The advantage of the filler material is the improvement of the ultrasonic transmission.

In preferred embodiments the ultrasonic deformable material of step ii. comprises at least one filler material.

The advantage of the filler material of the ultrasonic deformable material is the improvement of the material properties and workability during the manufacturing process.

In preferred embodiments the ultrasonic deformable material of step ii. covers the core material of step i. in a thickness between 0.05 and 1.5 mm.

The covering thickness of the ultrasonic deformable material can have the same thickness over the whole length of the endodontic obturation point, but can also change the thickness over the length.

The thickness of the ultrasonic deformable material in the range between 0.05 and 1.5 mm is advantageous because of the optimized size of the endodontic obturation point which can be easily inserted into the tooth root canal and offering at the same time sufficient ultrasonic deformable material for the optimized sealing of the tooth root canal and its side canals.

Furthermore, the invention relates to a kit of at least two endodontic obturation points. The endodontic obturation points comprise a core material and an outer material. The core material comprises an ultrasonic non-deformable material and the outer material comprises an ultrasonic deformable material. The at least two endodontic obturation points differ in size, such that a suitable endodontic obturation point can be selected based on the depth and width or depth or width of a tooth root canal preparation area.

Hereby the core material and the outer material are in direct contact to each other.

The non-deformable material of the core material is a solid material which doesn't deform under the influence of ultrasonic waves. In contrast, the deformable material of the outer material is a solid material which has the ability to deform irreversibly under the action of force after exceeding a yield point and to retain this shape after the action. In this sense the action of force is the use of ultrasonic waves.

The at least two endodontic obturation points are cylindrical or conical in shape.

Such a kit of at least two endodontic obturation points differing in size, provide the dentist during the treatment of a tooth root canal high flexibility and a fast and optimized adjustment for every possible tooth root canal shape. This means that there is no waiting period for the patient during which the dentist has to make manual adjustments to the endodontic obturation point.

The invention is explained in more detail in the following by means of examples in figures:
- Figure 1:: Side view of a first embodiment of an endodontic obturation point.
- Figure 2:: Cross section of a dental root canal model before and after ultrasonic treatment using an endodontic obturation point according to the invention.
- Figure 3:: Schematic representation of a typical ultrasonic welding equipment.
- Figure 4:: Experimental results of tooth root model a) treated with a conventional obturation point and a conventional method and b) treated with an inventive obturation point and an ultrasonic method.

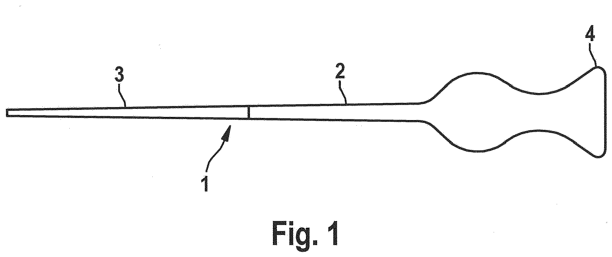

A conical shaped endodontic obturation point 1 shown in Figure 1 is used for obturating a tooth root canal. The endodontic obturation point 1 comprises a core material 2, an outer material 3 and a coupling element in form of a handle 4. The core material 2 is also formed in a conical shape. The handle 4 is on the broader end of the core material 2 positioned. Both, the core material 2 and the handle 4 are made of the same ultrasonic non-deformable material and are formed from one piece. The ultrasonic non-deformable material is with an E-modulus of about 4GPa and a diameter range between 0.3 and 1.01 mm. On the side opposite the handle 4, the core material 2 is coated with an outer material 3 to a certain extent. Hereby core material 2 and outer material 3 are in direct contact with each other. Polyisoprene and preferably gutta percha is used as the outer material 3 with a melting temperature in a range between 45 and 60 °C. The polyisoprene covers the core material with a covering thickness between 0.1 and 0.6 mm.

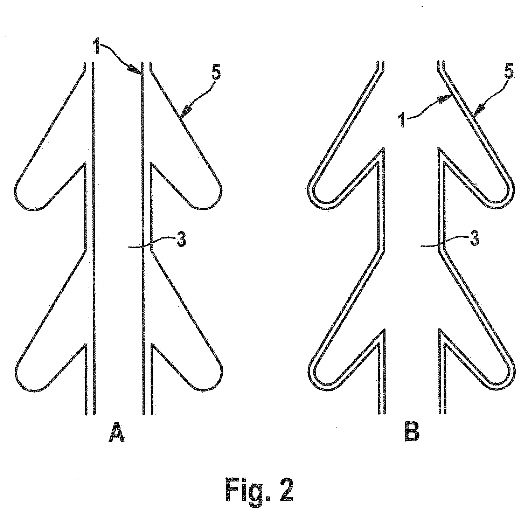

Figure 2 shows in scheme A an endodontic obturation point 1 positioned in a tooth root canal model 5 before an ultrasonic application. The endodontic point 1 is covered with an outer material 3. The outer material 3 is in this embodiment polyisoprene. In scheme B the endodontic obturation point 1 is shown in the tooth root canal model 5 after the ultrasonic application. It can be seen that the polyisoprene was liquified by the ultrasonic application and completely fills the tooth root canal model5 including the lateral tooth root canals and as a result seals the entire tooth root canal model 5.

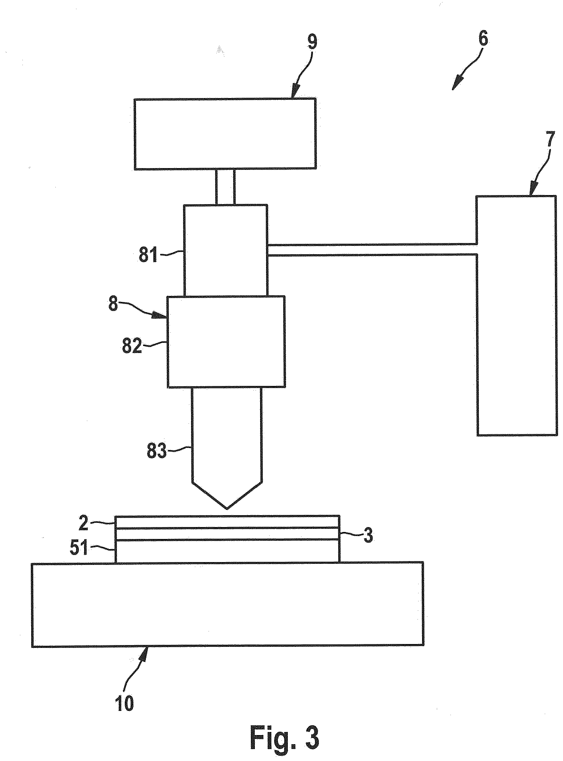

In Figure 3 the setup of a typical model of ultrasonic welding equipment 6 is shown. The schematic model is used to describe what happens in the root canal during obturation with ultrasonic equipment. The ultrasonic welding obturation equipment 6 comprises an ultrasonic generator 7 and an ultrasonic stack system 8. The ultrasonic welding obturation equipment 6 is used for welding the outer material 3 of the endodontic obturation point 1 to the surface of dentin 51 in the tooth root canal 5. Therefore, the ultrasonic generator 7 generates and delivers a high frequency electrical signal to the ultrasonic stack system 8, which consists of a converter 81, a booster 82 and a sonotrode 83. Using a piezoelectric effect, the converter 81 transduces the high frequency electrical signal into a high frequency mechanical vibration. The amplitude of the mechanical vibration is then modified by the booster 82. In a last step the sonotrode 83, vibrating at high frequency, transmits the mechanical vibration, when an activator 9 is manually pressed to the core material 2 of the endodontic obturation point 1. The core material 2, transmits further the mechanical vibration to the outer material 3. At the same time the outer material 3 is pressed to the dentin surface 51, which is fixed with a clamping device 10. Therefore, the outer material 3 and the surface of dentin 51 can be joined together.

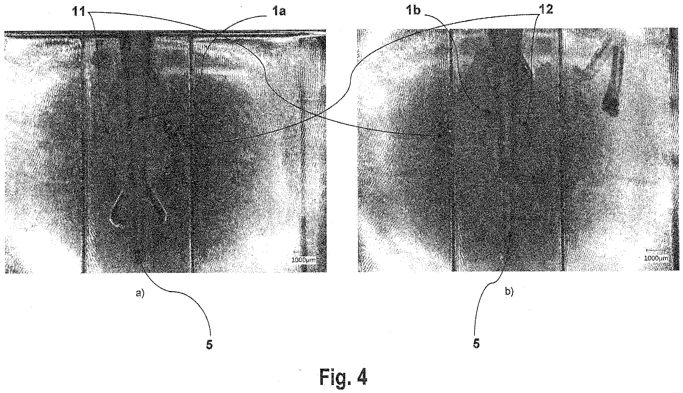

In Figure 4 experimental results are shown treating a tooth root model 5, a) by heating a conventional obturation point 1a in a heating oven to 150 to 200 °C and b) by treatment of an inventive obturation point 1b, with an ultrasonic method. The inventive obturation point 1b in b) melted completely and uniformly along the obturator length 11 and penetrated the lateral canals 12 in a better way compared to a), the conventional obturation point 1a heated in an heating oven.

## Claims

1. An endodontic obturation point for obturating a dental root canal, wherein the endodontic obturation point comprises
a. a core material comprising an ultrasonic non-deformable material, and
b. an outer material comprising an ultrasonic deformable material, and
c. a coupling element for transmitting ultrasonic waves to the obturation point, wherein the coupling element is positioned at the top of the obturation point

2. The endodontic obturation point according to claim 1,
wherein the ultrasonic non-deformable material is a polymeric material, preferably a thermoplastic, duroplastic or an elastomeric material.

3. The endodontic obturation point according to claim 1,
wherein the ultrasonic non-deformable material has a modulus of elasticity in the range of 0.05-400 GPa.

4. The endodontic obturation point according to claim 1,
wherein the diameter of the ultrasonic non-deformable material is between 0.1 mm and 2.5 mm, preferably between 0.15 mm and 1.9 mm.

5. The endodontic obturation point according to any of the preceding claims, wherein the ultrasonic deformable material is a thermoplastic material, preferably polyisoprene.

6. The endodontic obturation point according to any of the preceding claims, wherein the melting temperature of the ultrasonic deformable material is in a range between 30 and 150 °C, preferably 40 - 100 °C.

7. The endodontic obturation point according to any of the preceding claims, wherein the ultrasonic non-deformable material and / or the ultrasonic deformable material comprise at least one filler material.

8. The endodontic obturation point according to any of the preceding claims, wherein the covering thickness of the ultrasonic deformable material is between 0.05 and 1.5 mm, preferably between 0.1 and 1.2 mm.

9. The endodontic obturation point according to any of the preceding claims, wherein the endodontic obturation point is cylindrical or conical in shape.

10. The endodontic obturation point according to any of the preceding claims, wherein the coupling element comprises the same material as the core.

11. A method for manufacturing an endodontic obturation point according to claim 1 comprising the following steps,
i. providing a core material comprising an ultrasonic non-deformable material, which is a polymeric material comprising a modulus of elasticity in the range of 0.05 - 400 GPa.
ii. covering of at least a distal portion of said core material with an ultrasonic deformable material, which is a thermoplastic material comprising a melting temperature in a range between 30 and 150 °C, preferably 40 - 100 °C.

12. A method according to claim 11, wherein the core material of step i. comprises a diameter between 0.1 mm and 2.5 mm, preferably between 0.15 mm and 1.9 mm.

13. A method according to claim 11, wherein the ultrasonic deformable material of step ii. comprises at least one filler material.

14. A method according to claim 11, wherein the ultrasonic deformable material of step ii. covers the core material of step i. in a thickness between 0.05 and 1.5 mm, preferably between 0.1 and 1.2 mm.

15. A kit of at least two endodontic obturation points according to claim 1, wherein the at least two endodontic obturation points differ in size, such that a suitable endodontic obturation point can be selected based on the depth and/or width of a root canal preparation area.
